# EUROPEAN PATENT APPLICATION

(11) **EP 1 063 003 A2**
(43) Date of publication of application: **27.12.2000**
(21) Application number: 00113307.3
(22) Date of filing: 21.06.2000
(51) Int. Cl.: B01D 53/86, B01J 35/04, B01J 37/02

(54) **Catalytic structure for purifying exhaust gas**

(30) Priority: 22.06.1999 JP 17561299
(71) Applicant: NICHIAS CORPORATION, Tokyo (JP)
(72) Inventor: Tanaka, Minoru, Kawasaki-shi, Kanagawa (JP); Koizumi, Masahiro, Hino-shi, Tokyo (JP); Oikawa, Hidenori, Yokosuka-shi, Kanagawa (JP)
(74) Representative: Grünecker, Kinkeldey, Stockmair & Schwanhäusser Anwaltssozietät

(57) **Abstract**

A catalytic structure for exhaust gas includes a base material made of an inorganic fiber sheet formed into a honeycomb-shape. The base material holds a catalyst inside and on a surface thereof. An abrasion resistance coating is formed on obverse and reverse faces of the base material in an opening section on a gas introducing side from an entrance of the opening section on the gas introducing side toward an opening section on the gas exhausting side by a predetermined length.

## Description

### Background of the Invention

### 1. Field of the Invention

The present invention relates to improvements in a catalytic structure used for purifying exhaust gas. More particularly, the present invention relates a technique to improve the abrasion resistance property of a catalytic structure used for purifying exhaust gas in which a base material composed of an inorganic fiber sheet formed into a honeycomb-shape holds a catalyst.

### 2. Description of the Related Art

Recently, environmental problems have become the center of public interest. According to the rise of the public interest, they are much interested in the purification of exhaust gas discharged from various types of boilers. For example, exhaust gas discharged from oil-fired boilers and coal-fired boilers contains a large quantity of NOx (nitrogen oxides). In order to remove NOx from the exhaust gas, denitration devices are used.

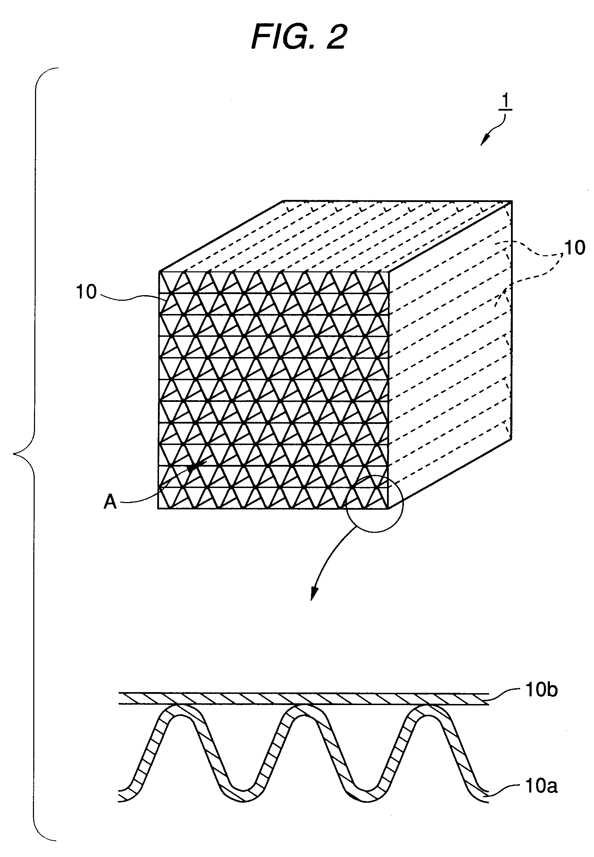

Concerning the catalytic structure used for the denitration device, for example, the catalytic structure 1 is used which has a honeycomb structure as shown in Fig. 2. This catalytic structure 1 is composed as follows. There is provided a honeycomb-shaped base material 10 composed in such a manner that the corrugated sheet 10a and the flat sheet 10b are alternately put on each other. The thus composed honeycomb-shaped base material 10 holds a denitration catalyst (not shown), the primary components of which are titanium oxide and tungsten trioxide. As shown by arrow A, exhaust gas is introduced from the gas introducing side opening section of the catalytic structure 1. While the introduced gas is coming into contact with the base material 10, the component of NOx is decomposed by the action of the denitration catalyst. Therefore, the exhaust gas can be purified. The thus obtained clean gas flows out from the gas discharging side opening section.

In this connection, the exhaust gas discharged from oil-fired boilers and coal-fired boilers contains a large quantity of dust (powder). Abrasion is caused in the base material 10 by the action of this dust. Accordingly, life of the catalytic structure 1 is shortened by this abrasion. Japanese Unexamined Patent Publication No. 59-335 discloses a technique in which the base material 10 is made of metal so as to enhance the abrasion resistance property of the base material.

However, the metallic base material 10 is disadvantageous in that only the surface of the metallic base material 10 can hold a catalyst, that is, a quantity of catalyst capable of being held by the metallic base material 10 is quite limited. Further, the metallic base material 10 is disadvantageous in that the catalyst is separated from the metallic base material 10 when dust contained in the exhaust gas collides with the catalyst.

On the other hand, there is used a catalytic structure 1, the base material 10 of which is composed of an inorganic fiber sheet. In this catalytic structure 1, the catalyst can be held by not only the surface of the base material 10 but also the spaces formed among the fibers arranged inside the base material 10. Therefore, this catalytic structure 1 is advantageous in that a quantity of catalyst to be held by the catalytic structure 1 can be increased.

However, in the case of the above inorganic fiber sheet, it impossible to avoid the occurrence of abrasion caused by dust contained in the exhaust gas. In order to avoid the occurrence of abrasion, for example, binder containing silica particles is used so that the abrasion resistance property can be enhanced. The above countermeasure is effective in the case of exhaust gas with relatively small quantity of dust. However, in the case of exhaust gas with relatively large quantity of dust, that is, in the case of exhaust gas discharged from oil-fired boilers and coal-fired boilers, it is impossible to provide a sufficiently high effect.

### Summary of the Invention

The present invention has been accomplished to solve the above problems. It is an object of the present invention to provide a catalytic structure used for exhaust gas, the quantity of catalyst held by the base material of which is large and the abrasion resistance property of which is high.

The object of the present invention can be accomplished by the catalytic structure for exhaust gas of the present invention characterized in that: a catalyst is held inside and on a surface of a base material composed of an inorganic fiber sheet formed into a honeycomb-shape; and an abrasion resistance coating is formed on obverse and reverse faces of the base material in an opening section on the gas introducing side from an entrance of the opening section on the gas introducing side toward an opening section on the gas exhausting side by a predetermined length.

### Brief Description of the Drawings

Fig. 1 is a perspective view showing a catalytic structure of the present invention, and also Fig. 1 is an enlarged view showing a portion of the catalytic structure.
Fig. 2 is a perspective view showing a conventional catalytic structure, and also Fig. 1 is an enlarged view showing a portion of the catalytic structure.

### Detailed Description of the Preferred Embodiments

Referring to the drawings, the catalytic structure used for exhaust gas of the present invention will be explained in detail as follows.

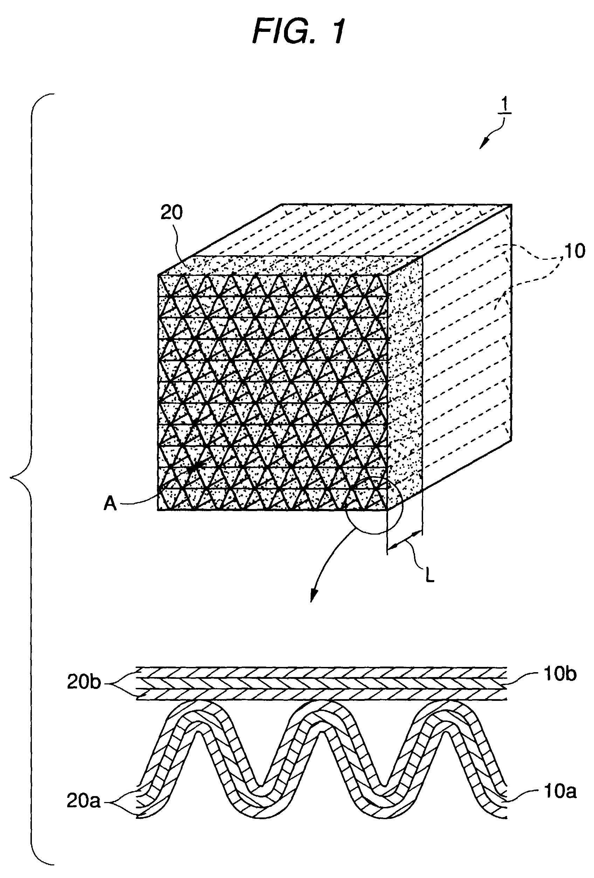

As shown in Fig. 1, the catalytic structure 1 used for exhaust gas of the present invention includes a honeycomb-shaped base material 10 in the same manner as that of the catalytic structure 1 shown in Fig. 2. Specifically, the base material 10 is composed in such a manner that the corrugated sheet 10a, which is composed of an inorganic fiber sheet, and the flat sheet 10b are alternately put on each other. The surface and spaces formed among the internal fibers of the thus composed honeycomb-shaped base material 10 hold a denitration catalyst (not shown), the primary components of which are titanium oxide and tungsten trioxide. Accordingly, the quantity of catalyst held by this base material composed of the fiber sheet is larger than that of the base material made of metal.

Examples of the usable materials to form the inorganic fiber sheet of the base material 10 are: silica-alumina fibers; glass fibers; and composite fibers in which silica-alumina fibers and glass fibers are combined with each other.

In this catalytic structure 1, an abrasion resistance coating 20 (shown in the enlarged view by the reference numbers 20a and 20b) is formed on obverse and reverse faces of the base material 10 in an opening section on the gas introducing side from an entrance of the opening section on the gas introducing side toward an opening section on the gas exhausting side by a predetermined length (L).

This abrasion resistance coating 20 contains at least one of the aggregates of particles of alumina, mullite, magnesia, spinel, zirconia and silica glass and also contains aluminum primary phosphate. If necessary, this abrasion resistance coating 20 further contains a chemical compound such as polyethylene glycol which conducts a defoaming action. Water is added to the aforementioned materials so as to obtain a paste-like coating agent. The thus obtained paste-like coating agent is coated on the obverse and reverse faces of the base material 10. Alternatively, the base material 10 is impregnated into the paste-like coating agent and then dried. In this way, the abrasion resistance coating 20 is obtained. It is preferable that alumina and mullite are mixed by the ratio of 3 to 2 as the aggregate. It is preferable that the particle size of the aggregate is 0.5 to 50 µm.

It is preferable that the content of aluminum primary phosphate is 20 to 60 weight parts by solid conversion with respect to the aggregate of 100 weight parts. Aluminum primary phosphate acts as binder. Accordingly, when the content of aluminum primary phosphate is smaller than 20 weight parts, the adhesive force to the base material 10 is weak. On the other hand, when the content of aluminum primary phosphate exceeds 60 weight parts, a quantity of aggregate becomes too small, and it become impossible to provide a sufficiently high abrasion resistance property.

It is possible to make the same catalyst as one held by the base material 10 contain in the coating agent. Due to the foregoing, it becomes possible to make up for a reduction of the catalytic action when the abrasion resistance coating 20 is formed.

In order to improve the sticking property of the coating agent to the surface of the base material, it is preferable that the concentration of the entire solid component is adjusted to be 40 to 60 weight % by adding water when the coating agent is applied.

It is preferable that the quantity of the abrasion resistance coating 20 to be held is not less than 100 kg/m³. When the quantity of the abrasion resistance coating 20 to be held is smaller than 100 kg/m³, it is impossible to keep the abrasion resistance property high over a long period of time. The area of the abrasion resistance coating 20 is not particularly limited. However, the larger the area of the abrasion resistance coating 20, the smaller the area in which the catalyst is exposed, and the catalytic capacity is lowered. On the other hand, the smaller the area of the abrasion resistance coating 20, the lower the abrasion resistance property is deteriorated. Accordingly, it is appropriate that the abrasion resistance coating 20 is formed from the end portion of the gas introducing side opening section by a predetermined length (L) so that the abrasion resistance coating 20 can occupy an area of 1/10 to 1/200 of one face of the base material.

Concerning the method of forming the abrasion resistance coating 20, it is simple that the base material 10 is dipped in the coating agent by the depth corresponding to the predetermined length L. According to this method, it is possible to form a tight abrasion resistance coating 20 on the base material 10, the thickness of which is uniform.

In the catalytic structure 1 composed as described above, as shown by arrow A, exhaust gas is introduced from the gas introducing side opening section in which the abrasion resistance coating 20 is formed. While the exhaust gas is coming into contact with the base material 10, the component of NOx is decomposed by the denitration catalyst, so that the exhaust gas can be purified. The thus obtained clean gas flows out from the gas exhausting side opening section. At this time, the dust contained in the exhaust gas collides with the abrasion resistance coating 20 and its flowing speed is decreased. Accordingly, the impact force given to the base material 10, which is located on the downstream side of the abrasion resistance coating 20, can be reduced. As a result, the base material 10 can be prevented from wearing and the catalyst can be prevented from separating from the surface of the base material 10.

Referring to embodiments and comparative examples, the present invention will be specifically explained as follows.

### (Embodiment 1)

Aluminum primary phosphate of 50 weight parts by solid conversion and polyethylene glycol of a small amount (1 weight part) were added to the aggregate of 100 weight parts composed of mixture of mullite/alumina (ratio of mixture = 2/3), the particle size of which was 325 mesh, and further, water was added to it. In this way, a paste-like coating agent, the concentration of the entire solid components of which was 60 weight parts, was prepared.

This coating agent was coated by the length of 50 mm (= L) on the gas introducing side opening section of the base material which was formed in such a manner that an inorganic fiber sheet was formed into a honeycomb-shape as shown in Fig. 1, and this base material held the catalyst of titanium oxide and tungsten trioxide. In this case, the quantity of the coating agent was coated being kept at 100 kg/m³. In this way, the catalytic structure A was made.

### (Embodiment 2)

In this embodiment, a quantity of the coating agent was 175 kg/m³. Except for that, Embodiment 2 was the same as Embodiment 1, and catalytic structure B was made.

### (Comparative Example 1)

Catalytic structure C made of the same base material as that of Embodiment 1 was made.

### (Comparative Example 2)

Catalytic structure D was made in such a manner that the same base material as that of Embodiment 1 was used and coated with a conventional silica binder.

### (Abrasion Resistance Test)

In order to check the abrasion resistance property, the above catalytic structures A to D were respectively subjected to the acceleration test in which the sand blasting device was used. In this acceleration test, air (flow rate: 15.8 m/sec) containing sand (quantity of jetted sand: about 1 g/sec) was supplied to the gas introducing side opening of each catalytic structure for 20 and 30 minutes, and a total quantity (cc) of the separated base material and catalyst was measured. The results of the tests are shown on Table 1.

**Table 1**

| | Embodiment 1 | Embodiment 2 | Comparative Example 1 | Comparative Example 2 |
|---|---|---|---|---|
| Processing method | Abrasion-resistant coating (100 kg/m³) | Abrasion-resistant coating (175 kg/m³) | Not processed yet | Silica binder coating |
| 20 minutes (cc) | 1.6 | 1.8 | 109 | 38 |
| 30 minutes (cc) | 2.6 | 3.0 | 155 | 47 |

As shown on Table 1, the abrasion resistance property of catalytic structure A, B on which the abrasion resistance coating was formed according to the present invention was more than 50 times as high as that of catalytic structure C composed of only the base material. Also, the abrasion resistance property of catalytic structure A, B on which the abrasion resistance coating was formed according to the present invention was more than 15 times as high as that of catalytic structure D on which the conventional binder was coated. In this way, the effect provided by forming the abrasion resistance coating was confirmed.

In the above explanation of the catalytic structure of the present invention, the denitration catalyst was used. Of course, the type of the catalyst to be held by the catalytic structure may be changed.

As explained above, according to the present invention, the abrasion resistance coating is formed on the obverse and reverse faces of the gas introducing side opening section of the base material. Therefore, it is possible to obtain a catalytic structure used for exhaust gas which is capable of holding a large quantity of catalyst and exhibiting a high abrasion resistance property.

While only certain embodiments of the invention have been specifically described herein, it will be apparent that numerous modifications may be made thereto without departing from the spirit and scope of the invention.

The present invention is based on Japanese Patent Application No. Hei. 11-175612 which is incorporated herein by reference.

## Claims

1. A catalytic structure for exhaust gas comprising:
a base material made of an inorganic fiber sheet formed into a honeycomb-shape, said base material holding a catalyst inside and on a surface thereof,
wherein an abrasion resistance coating is formed on obverse and reverse faces of said base material in an opening section on a gas introducing side from an entrance of the opening section on the gas introducing side toward an opening section on the gas exhausting side by a predetermined length.

2. A catalytic structure according to claim 1, wherein the abrasion resistance coating includes:
at least one aggregate including particles selected from the group consisting of alumina, mullite, magnesia, spinel, zirconia and silica glass; and
aluminum primary phosphate.

3. A catalytic structure according to claim 2, wherein a content of the aluminum primary phosphate is 20 to 60 weight parts by solid conversion with respect to the aggregate of 100 weight parts.

4. A catalytic structure according to claim 2, wherein the abrasion resistance coating further includes polyethylene glycol.

5. A catalytic structure according to claim 2, wherein the aggregate of the abrasion resistance coating includes alumina and mullite mixed by the ratio of 3 to 2.

6. A catalytic structure according to claim 2, wherein a particle size of the aggregate is 0.5 to 50 µm.

7. A catalytic structure according to claim 1, wherein the abrasion resistance coating further includes a catalyst.

8. A catalytic structure according to claim 2, wherein the abrasion resistance coating further includes a catalyst.

9. A catalytic structure according to claim 3, wherein the abrasion resistance coating further includes a catalyst.

10. A catalytic structure according to claim 1, wherein a quantity of the abrasion resistance coating to be held is not less than 100 kg/m³.

11. A catalytic structure according to claim 1, wherein the abrasion resistance coating occupies an area of 1/10 to 1/200 of one face of said base material.

12. A catalytic structure according to claim 1, wherein the abrasion resistance coating is formed with a paste-like coating agent applied on the obverse and reverse faces of said base material by one of coating and impregnating before drying.

13. A catalytic structure according to claim 12, wherein a concentration of the entire solid component is adjusted to be 40 to 60 weight % by adding water when the coating agent is applied.

14. A catalytic structure according to claim 12, wherein the abrasion resistance coating is formed on said base material by dipping in the coating agent by the depth corresponding to the predetermined length.
